# EUROPEAN PATENT SPECIFICATION

(11) **EP 2 674 038 B1**
(45) Date of publication and mention of the grant of the patent: **31.10.2018**
(21) Application number: 13171703.5
(22) Date of filing: 12.06.2013
(51) Int. Cl.: A23P 20/12, A23L 29/212, A23L 19/18

(54) **Heat moisture treated and thermally inhibited starches and flours that improve the crispness of battered and breaded foods**
Wärme- und Feuchtigkeitsbehandelte und thermisch inhibierte Stärken und Mehle zur Verbesserung der Knusprigkeit von mit Teig und Brot beschichteten Lebensmitteln
Farines et amidons traités à la chaleur humide et inhibés thermiquement permettant d'améliorer le croustillant de pâte à frire et aliments panés

(30) Priority: 13.06.2012 US 201261659025 P; 05.07.2012 US 201213542162
(43) Date of publication of application: 18.12.2013
(73) Proprietor: CORN Products Development Inc., Westchester, IL 60154 (US)
(72) Inventor: Sistrunk, Callen, Sparta, NJ New Jersey 07871 (US); Shah, Himanshu, Branchburg, NJ New Jersey 08879 (US); Tarak, Shah, Raritan, NJ New Jersey 08869 (US)
(74) Representative: Held, Stephan

(56) References cited:
- EP-A1- 1 228 700
- EP-A2- 0 898 902
- WO-A1-00/28828
- US-A- 5 141 759
- US-B1- 6 221 420

## Description

### INTRODUCTION

The incorporation of low levels of tapioca dextrins into starch enrobing slurries is known in a variety of forms including as pure compositions (Crisp Coat®, National Starch) and as blends with high amylose starches (Crisp Coat UC® and Crisp Coat SC®, National Starch). The crispness of the enrobed food after frying is determined by several factors including the cook-out of the starch and/or flour, the moisture balance between the starch and/or flour solution surface and inside of the food, the thickness of the coating layer, and the interaction of ingredients in the enrobing slurry. The coating forms a discontinuous film which lets the moisture from the inside of the food escape or vent out, but will not absorb significant amounts of moisture into the coating layer. There is a trend in the food industry to provide "all natural" battered and breaded foods. In order to achieve this objective, chemically modified starch and dextrin may not be used. Chemically modified starches can be replaced by thermally modified alternatives. However, no effective alternative had been found in the past to replace the dextrin in fry coatings to provide an enhanced crisping effect.

Woerman et al. in US Patent Number 5,750,168 issued May 12, 1998 teach aqueous starch enrobing slurries comprising not less than 30% by weight ungelatinized cross-linked tapioca starch, a rice flour component at a solids concentration of from about 10% to about 25% by weight, and which is substantially free of corn starch. Thomas *et al.* in US Patent No. US 6,221,420 B1, issued Apr. 24, 2001 show a thermally inhibited, waxy maize starch and thermally inhibited, waxy rice flour in a 25% fat salad dressing. Wong *et al.* in US Patent No. US 7,223,433 B2 issued May 29,2007 teach a flour/starch blend for preparing stuffed rolls wrappers comprising from 48% to 52% of high amylose rice starch, from 31% to 36% of high amylose rice flour, from 8% to 12% of potato starch, from 4% to 7% of modified tapioca starch, and from 0.2 to 2% of pregelatinized wheat flour.

Rogels et al. in Patent Application Publication No. US 2001/0004463 A1, dated Jun. 21, 2001 describe a fry coating composition comprising ungelatinized starch and not less than 50% of rice flour. Scavone et al. in Patent Application Publication No. US 2001/0055637 A1, dated Dec. 27, 2001 describe a coating for potato strips comprising cross-linked potato starch (39.245 wt%), high amylose corn starch (30.83 wt%), tapioca dextrin (13.215 wt%), and rice flour (15.0 wt%). Brown et al. in Patent Application Publication No. US 2006/0025382 A1, dated Feb. 2, 2006 teach an extruded breakfast cereal containing 43% modified maize starch, 11.5% rice flour, 11.5% oat flour, and 20.4% wheat flour. Villagran et al. in Patent Application Publication No. US 2006/0286271 A1, dated Dec. 21, 2006, teach a rice flour composition having from about 20% to about 95%, by weight, of a rice flour and from about 5% to about 80%, by weight, of rice starch material. DeStafeno in Patent Application Publication No. US 2009/0181147 A1, dated Jul. 16, 2009, teaches a dry mix for gluten-free baked goods comprised of approximately 1/2 part rice flour, 1/8 part tapioca starch, and 1/8 part corn starch. Foo et al. in Patent Application Publication No. US 2011/0151094 A1, dated Jun. 23, 2011, teach a rice-based food product having a reduced GI value comprising mixing rice flour and tapioca starch to form a dry mix.

### SUMMARY

The application provides a composition comprising separately by weight:
a) from 20% to 70% of non-gelatinized starch,
b) from 5% to 40% of native rice flour,
c) from 5% to 30% of high amylose corn starch, and
d) from 10% to 40% of flour or starch, which has been heat moisture treated or thermally inhibited, wherein the non-gelatinized starch is potato starch, corn starch, tapioca starch, or any mixtures thereof, wherein the flour or starch, which has been heat moisture treated or thermally inhibited is heat moisture treated rice flour, thermally inhibited waxy rice starch, thermally inhibited sorghum flour, heat moisture treated or thermally inhibited waxy wheat flour, or any mixtures thereof and wherein the composition is dextrin free.

### DETAILED DESCRIPTION

The application provides a composition comprising separately by weight:
a) from 20% to 70% of non-gelatinized starch,
b) from 5% to 40% of native rice flour,
c) from 5% to 30% of high amylose corn starch, and
d) from 10% to 40% of flour or starch, which has been heat moisture treated or thermally inhibited, wherein the non-gelatinized starch is potato starch, corn starch, tapioca starch, or any mixtures thereof, wherein the flour or starch, which has been heat moisture treated or thermally inhibited is heat moisture treated rice flour, thermally inhibited waxy rice starch, thermally inhibited sorghum flour, heat moisture treated or thermally inhibited waxy wheat flour, or any mixtures thereof and wherein the composition is dextrin free.

In one embodiment, the amount by weight of non-gelatinized starch is from 30% to 50%.

In one embodiment, the amount by weight of non-gelatinized starch is from 35% to 40%.

In one embodiment, the amount by weight of native rice flour is from 15% to 30%.

In one embodiment, the amount by weight of native rice flour is from 18% to 24%.

In one embodiment, the amount by weight of high amylose corn starch is from 9% to 24%.

In one embodiment, the amount by weight of high amylose corn starch is from 12% to 17%.

In one embodiment, the amount by weight of flour or starch, which has been heat moisture treated or thermally inhibited is from 10% to 35%.

In one embodiment, the amount by weight of flour or starch, which has been heat moisture treated or thermally inhibited is from 20% to 25%.

In one embodiment, the amount by weight of non-gelatinized starch is from 35% to 40%, the amount by weight of native rice flour is from 18% to 24%, the amount by weight of high amylose corn starch is from 12% to 17%, and the amount by weight of flour or starch, which has been heat moisture treated or thermally inhibited is from 20% to 25%.

The application provides an enrobing solution comprising one part by weight of a composition comprising separately by weight:
a) from 20% to 70% of non-gelatinized starch,
b) from 5% to 40% of native rice flour,
c) from 5% to 30% of high amylose corn starch, and
d) from 10 % to 40% of flour or starch, which has been heat moisture treated or thermally inhibited, wherein the non-gelatinized starch is potato starch, corn starch, tapioca starch, or any mixtures thereof, wherein the flour or starch, which has been heat moisture treated or thermally inhibited is heat moisture treated rice flour, thermally inhibited waxy rice starch, thermally inhibited sorghum flour, heat moisture treated or thermally inhibited waxy wheat flour, or any mixtures thereof and wherein the composition is dextrin free; and from one part to two parts by weight of water.

In one embodiment, the enrobing solution comprises from 1.2 parts to 1.6 parts by weight of water.

The application provides an enrobed food prepared with an enrobing solution comprising one part by weight of a composition comprising separately by weight:
a) from 20% to 70% of non-gelatinized starch,
b) from 5% to 40% of native rice flour,
c) from 5% to 30% of high amylose corn starch, and
d) from 10% to 40% of flour or starch, which has been heat moisture treated or thermally inhibited, wherein the non-gelatinized starch is potato starch, corn starch, tapioca starch, or any mixtures thereof, wherein the flour or starch, which has been heat moisture treated or thermally inhibited is heat moisture treated

In one embodiment, the enrobed food is then baked.

In one embodiment, the enrobed food is then, in any sequence, par fried, frozen, and baked.

The present application provides improved aqueous coatings which provide improved crispness and other physical properties to coated food products such as sweet potato fries in the absence of a dextrin component, as set forth in the claims. As one aspect of the present application, coatings have been found that provide various improved properties to the resulting sweet potato fries which they are used to coat. Specifically it has been found that unexpected crispness can be obtained in sweet potato fry coating compositions without dextrin by using aqueous coating having an as-is solids content comprising ungelatinized starch, native rice flour, high amylose starch and not less than 10% flour or starch, which has been heat moisture treated or thermally inhibited. In another embodiment, the coating comprises not less than 20% flour or starch, which has been heat moisture treated or thermally inhibited. In another embodiment the coating comprises not less than 25% flour or starch, which has been heat moisture treated or thermally inhibited. The flour or starch, which has been heat moisture treated or thermally inhibited is rice flour, waxy rice starch, sorghum flour, or waxy wheat flour. It has been found that the use of such coatings comprising elevated levels of flour or starch, which has been heat moisture treated or thermally inhibited (rice flour, waxy rice starch, sorghum flour, or waxy wheat flour) in combination with ungelatinized starches, native rice flour, and high amylose starch provides surprisingly improved crispness to the coated sweet potato fries. The ungelatinized starch is potato starch, corn starch, or tapioca starch. In one embodiment of the application, tapioca starch is the ungelatinized starch.

This application provides a coating which provides improved crispness and other physical properties to food pieces such as meat, poultry, fish, and vegetables. One aspect of the present application is to improve the crispiness of the French fry coating. It has been found that improved crispness can be obtained in a sweet potato fry coating as set forth in the claims having an as-is solids content containing ungelatinized starch, native rice flour, high amylose starch, and not less than 10% of flour or starch, which has been heat moisture treated or thermally inhibited. In one embodiment, 20% flour or starch, which has been heat moisture treated or thermally inhibited is used. In another embodiment, 40% flour or starch, which has been heat moisture treated or thermally inhibited from one of the following sources: rice flour, waxy rice starch, sorghum flour, or waxy wheat flour is used.

This coating contains ungelatinized starches from one of the following sources potato, corn, or tapioca; native rice flour; high amylose starch; flour or starch, which has been heat moisture treated or thermally inhibited from one of the following sources (rice flour, waxy rice starch, sorghum flour, or waxy wheat flour); salt; leavening; dextrose; and xanthan gum.

The application further provides processes for preparing a frozen sweet potato product with a film-like coating on the outer surface and the products so produced, which comprises cutting the raw sweet potatoes; blanching the sweet potatoes; partially drying the sweet potatoes; coating the sweet potatoes with the aqueous enrobing solutions of the application; followed by par frying the sweet potatoes in hot oil; and freezing the sweet potatoes.

The application further provides a dry coating mix as set forth in the claims for coating the outer surface of a sweet potato product having an as-is solids content comprising ungelatinized starch, native rice flour, high amylose starch and in one embodiment not less than 10% flour or starch, which has been heat moisture treated or thermally inhibited. In another embodiment, the dry coating comprises not less than 20% flour or starch, which has been heat moisture treated or thermally inhibited. In another embodiment the dry coating comprises not less than 25% flour or starch, which has been heat moisture treated or thermally inhibited. The heat moisture treated or thermally inhibited flour or starch is rice flour, waxy rice starch, sorghum flour, or waxy wheat flour. The application further provides methods of producing such a dry coating mix comprising blending ungelatinized starch, native rice flour, high amylose starch, and in one embodiment not less than 10% flour or starch, which has been heat moisture treated or thermally inhibited. In another embodiment, the method comprises blending not less than 20% flour or starch, which has been heat moisture treated or thermally inhibited. In another embodiment, the method comprises blending not less than 25% flour or starch, which has been heat moisture treated or thermally inhibited. The flour or starch, which has been heat moisture treated or thermally inhibited is rice flour, waxy rice starch, sorghum flour, or waxy wheat flour.

Preliminary screening of numerous compositions revealed that several starches or flours, which were heat moisture treated or thermally inhibited, were acceptable to create a dextrin free coating with similar or better crispiness as compared to compositions, which contain dextrin. Specifically, there were several starch or flour compositions without dextrin that worked in aqueous starch enrobing solutions with similar or better crispness:
1) a commercially available, heat moisture treated, rice flour;
2) a commercially available, thermally inhibited, waxy rice starch;
3) a commercially available, heat moisture treated, waxy wheat flour;
4) thermally inhibited waxy wheat flour; and
5) thermally inhibited sorghum flour.

A commercially available, heat moisture treated, rice flour was investigated in detail. The other heat moisture treated and thermally inhibited starches and flours were also tested but to a lesser extent.

Processes for the production of frozen sweet potato fries are well known and include the basic steps of preparing raw potatoes by washing, peeling, and cutting into appropriately shaped pieces. The resulting potato strips are then blanched according to conventional methods in order to inactivate enzymes in the potato and to leach sugars from the surface of the sweet potato strip. In one embodiment, the blanched sweet potato strips are treated in a brine solution containing about 0.75% sodium acid pyrophosphate (SAPP). After these steps, the sweet potato strips are then subjected to a drying step to reduce the moisture present in the strips.

The strips are then coated with the aqueous enrobing solution of the composition according to claim 1. In one embodiment, 20% of flour or starch, which has been heat moisture treated or thermally inhibited is used. In one embodiment, 40% of flour or starch, which has been heat moisture treated or thermally inhibited is used. After blending of the solid ingredients with a desired amount of water to produce the sweet potato fry enrobing solution, the enrobing solution may be applied to coat the cut potato strips with a coating pickup of from 8% to 30%. In one embodiment, the coating pickup is from 12% to 18%. In one embodiment, the coating pickup is 15%, (based on coated sweet potato strips weight).

After coating with the aqueous enrobing solution, the sweet potato strips are drained and par fried at a temperature of from 182° C to 199° C for a time period from 40 seconds to 90 seconds. Par frying serves to gelatinize the starch of the sweet potato strips and of the coating and removes moisture from the inside of the sweet potato strip.

The sweet potato strips are then frozen, packaged, and in one embodiment stored at a temperature below -18° C until they are prepared for final consumption. In order to prepare the potato strips for consumption, they are cooked either by frying or by baking in an oven. After such preparation, sweet potato strips prepared according to the application are characterized by a crisp outer layer and a moist tender interior.

A variety of other flours and starches may optionally be used in producing the coating compositions of the application including, but not limited to, potato starch, potato flour, sago starch, sago flour, wheat starch, oat flour, oat starch, corn flour, or corn starch.

Optional ingredients for use in providing the coating compositions of the application include maltodextrins, microcrystalline cellulose, hydrocolloids, gums including xanthan gum or guar gum, or the like which are used to provide improved structure and keeping qualities to the coated sweet potato products. Maltodextrins are used in one embodiment at solids concentrations of up to 6%. Maltodextrins useful with the application may be derived from any type of starch including tapioca, potato, or corn starch and include those characterized by having a DE in the range from 2 to 7. In one embodiment, the maltodextrins has a DE of about 5. In one embodiment, gum blends are incorporated into the compositions of the application at solids concentrations of less than 0.15% gum by weight.

Leavening agents in the form of baking powders may also be incorporated into the compositions of the application in order to open up the structure of the coating batters upon cooking and release moisture from the French fry products without blowing off the coating layer. Suitable baking powders include sodium bicarbonate plus one or more leavening acids such as sodium aluminum phosphate (SALP), sodium aluminum sulfate (SAS), sodium acid pyrophosphate (SAPP), dicalcium phosphate (DCP), or anhydrous monocalcium phosphate (AMCP). The combination of sodium bicarbonate and SAPP is one embodiment. Such leavening agents are, in one embodiment, added at sodium bicarbonate concentrations from 0.9 parts soda to 1.1 parts SAPP.

The compositions of the application may include protein components such as sodium caseinate, nonfat dry milk, soy, whey, or dried egg whites. Such proteins interact with the carbohydrates in the coating compositions to increase film strength, provide structure, improve crispness, and prolong holding of crispness. The compositions of the application may include carbohydrate components such as microcrystalline cellulose or the like. Still other optional ingredients may also be incorporated into the coating compositions of the application including salt, flavorings, seasonings, or browning agents such as whey or dextrose.

In one embodiment, the sweet potato fry aqueous enrobing solution is prepared by dry blending of the various solid ingredients. Water is then slowly added to the dry ingredients in an amount selected to provide an appropriate viscosity to the coating batter. In one embodiment, aqueous slurries containing from 1.2 parts to 1.6 parts by weight of water to 1 part by weight of the solid ingredients have a satisfactory viscosity for coating the potato strips. The ungelatinized starches do not substantially contribute to the viscosity of the solution. In another embodiment, the sweet potato fry aqueous enrobing solution is prepared by adding a dry blend of the various solid ingredients to water. In another embodiment, the sweet potato fry aqueous enrobing solution is prepared by adding the various solid ingredients, either one at a time or in combinations, to water.

Controlling moisture migration is important to maintaining the crispness of the sweet potato fries during holding prior to consumption. The coating may, in one embodiment, be somewhat brittle, which gives a clean bite with minimum toughness. There is a fine balance between all the ingredients in the coating formula to achieve crispness and keeping quality with the method used to process the sweet potato strips contributing to the crispness of the sweet potato fries. It is further contemplated that the improved properties provided by the solids making up the enrobing solutions of the application may also be provided when the solids ingredients making up the solutions are applied to sweet potato products in a non-aqueous solution form such as by dusting.

### DEFINITIONS

The following definitions are used in connection with the compounds of the present application unless the context indicates otherwise. Enrobed food is food coated or encased or sealed by something. The acronym DE means dextrose equivalent. The phrase "as-is solids content" refers to a solids content for a composition assuming a water concentration in the starch or flour components of about 12% by weight.

As used herein, the term "dextrin" means the products made by heating dry starch with or without acid. During the reaction, greater or lesser amounts of hydrolysis; transglycosidation, and repolymerization occur. According to which reaction predominates, the product is a white dextrin, a yellow dextrin, or a British gum.

As used herein, the term "dextrin-free" means less than about 0.1% dextrin, less than about 0.05% dextrin, less than about 0.01% dextrin, or essentially 0% dextrin.

As used herein, the phrase "heat moisture treatment" means a process in which a subject is heated by using, as a heating medium, saturated steam or hot water in a high-humidity atmosphere, for example, an atmosphere of at least 60% humidity. The subject to be heated may be brought into direct contact with the heating medium or the subject may be brought into indirect contact with the heating medium like an indirect heating system, for example, in an atmosphere of at least 60% humidity may be performed. The heat moisture treatment of native starch causes an irreversible modification of the semicrystalline structure, which changes from an ordered state to a disordered state, resulting in gelatinization. The gel thus formed is not stable and after a few days the starch restructures itself into a more ordered structure, this phenomenon being known as retrogradation. The physical characteristics of starches are modified by heat moisture treatment without change in their granular appearance. These changed characteristics include change in equilibrium moisture content, change in X-ray diffraction pattern, change in the swelling power of starch granules, and increase in the gelatinization temperature.

As used herein, the term "high amylose" includes a starch containing at least 40% amylose by weight. As used herein, the phrase, "comprising separately" means each of the following items must be included individually, no item can fill more than one of the roles, but the phrase does not exclude additional, unrecited elements.

As used herein, the phrase "hydrothermal treatments" refers to both annealing and heat moisture treatment. These modify the physicochemical properties of starch without destroying the granule structure. Both treatments involve incubation at certain moisture levels and temperatures above the glass transition temperature and below the gelatinization or melting temperature. Heat treatments at higher-moisture levels have been termed "annealing" (ANN) while treatments performed at lower-moisture levels have been termed "heat moisture treatments" (HMT).

As used herein, the phrase "inhibited flour or starch" means a flour or starch altered by physical or chemical treatment to give reduced gelatinization in hot water and/or greater stability to acids and alkalis.

As used herein, the phrase "non-gelatinized starch" means a starch that has not been gelatinized. Starch gelatinization is a process that breaks down the intermolecular bonds of starch molecules in the presence of water and heat. Gelatinization irreversibly dissolves the starch granule, increases the randomness of the general granule structure, and decreases the number and size of crystalline regions. As the gelatinization proceeds, the starch loses its birefringence and its Maltese cross.

As used herein, the phrase "rice flour" means the product obtained by finely grinding grains of rice. The rice flour may be made from short grain rice, medium grain rice, long grain rice, white rice, brown rice, or any mixtures thereof.

As used herein, the phrase "thermally inhibited starch or flour" means a starch or flour subjected to a heat treatment process that results in the starch or flour becoming and remaining inhibited. A starch or flour is referred to as "inhibited" or "thermally inhibited" if these thermally inhibited starches or flours when dispersed and/or cooked in water exhibit the textural and viscosity properties characteristic of a chemically-cross-linked starch or flour. The starch granules are more resistant to viscosity breakdown. This resistance to breakdown results in what is subjectively considered a non-cohesive or "short" textured paste, meaning that the gelatinized starch or flour tends to be salve-like and heavy in viscosity rather than runny or gummy. The non-pregelatinized thermally inhibited granular starches or flours exhibit an unchanged or reduced gelatinization temperature. In contrast, most annealed and heat/moisture treated starches or flours show an increased gelatinization temperature. Chemically cross-linked starch or flours show an unchanged gelatinization temperature. It is believed the overall granular structure of the thermally inhibited starches has been altered. The starches that are substantially completely thermally inhibited will resist gelatinization. The starches that are highly inhibited will gelatinize to a limited extent and show a continuing rise in viscosity but will not attain a peak viscosity. The starches that are moderately inhibited will exhibit a lower peak viscosity and a lower percentage breakdown in viscosity compared to the same starch that is not inhibited. The starches that are lightly inhibited will show a slight increase in peak viscosity and a lower percentage breakdown in viscosity compared to the same starch that is not inhibited. For non-pregelatinized thermally inhibited starches, the Brabender viscosity initializes (starts to build) at an earlier or substantially the same time as the same starch which has not been thermally inhibited. In addition, the thermally inhibited starches will have less viscosity breakdown than the same starch which has not been thermally inhibited.

Starch or flour inhibition may be characterized by Brabender curves. For a highly inhibited starch or flour, the Brabender curve will be flat, indicating that the starch or flour is so inhibited that it is resisting any further gelatinization or the curve will be a rising Brabender curve, indicating that further gelatinization is occurring at a slow rate and to a limited extent. For a less inhibited starch or flour, the Brabender curve will show a dropping curve, but the overall breakdown in viscosity from the peak viscosity will be lower than that for a non-inhibited starch or flour. Thermally inhibited starches and methods for making them are known and described in U.S. Patents No. 5,725,676, 5,932,01, or 6,231,675.

### EXAMPLES

**Example 1 Comparison of a commercially available, heat moisture treated, rice flour, a commercially available, thermally inhibited, tapioca starch, and a commercially available, thermally inhibited, waxy rice starch to tapioca dextrin in a sweet potato product coating.** According to this example, dextrin was substituted in a standard sweet potato fry composition with a heat moisture treated rice flour, a thermally inhibited tapioca starch, or a thermally inhibited waxy rice starch. See the methodology and comparative sensory results below. Sweet potatoes were peeled, pre-heated in water for 30 minutes at 71° C, cut into 3/8 inch strips, and immersed and blanched in hot water for 3 minutes at 88° C. After blanching, the potato strips were immersed for 30 seconds in an aqueous solution comprising 0.75% SAPP which was held at a temperature of 71-77° C. After removal, the strips were drained and then dried in a conventional dryer at 60° C, for a sufficient length of time to produce a 10 to 14 percent water loss.

Enrobing solutions were then prepared comprising the ingredients listed in Table 1 including water. The dry ingredients were combined, added to water at a 1:1.4 ratio, and well mixed using a KitchenAid® mixer. The sweet potato strips were then dipped in the starch solution. The sweet potato strips were then drained to remove excess solution and to achieve a solution coating pickup about 12-18%, averaging 15%. The strips were then par fried in soybean oil for 60 seconds at 191° C. The sweet potato strips were transferred into plastic trays, frozen in a blast freezer at -29° C for 1 hour minimum, and stored in a freezer for two weeks at -23° C before being evaluated by sensory descriptive profiling. See Table 2 for results.

**Table 1**

| Ingredient | 1A (%) | 1B (%) | 1C (%) | 1D (%) |
|---|---|---|---|---|
| a commercially available, thermally inhibited tapioca starch | 53.00 | 53.00 | 53.00 | 53.00 |
| rice flour | 24.88 | 24.88 | 24.88 | 24.88 |
| an unmodified corn starch containing about 55% amylose | 7.00 | 7.00 | 7.00 | 7.00 |
| salt | 3.00 | 3.00 | 3.00 | 3.00 |
| dextrose | 1.00 | 1.00 | 1.00 | 1.00 |
| sodium bicarbonate | 1.00 | 1.00 | 1.00 | 1.00 |
| xanthan gum | 0.12 | 0.12 | 0.12 | 0.12 |
| turmeric and oleoresin paprika | <0.10 | <0.10 | <0.10 | <0.10 |
| a commercially available tapioca dextrin | 10.00 | | | |
| commercially available, heat moisture treated, rice flour | | 10.00 | | |
| a commercially available, thermally inhibited tapioca starch (same as above) | | | 10.00 | |
| a commercially available, thermally inhibited, waxy rice starch | | | | 10.00 |
| total | 100.00 | 100.00 | 100.00 | 100.00 |

Frozen sweet potato fry samples were portioned out in batches prior to baking. Samples were baked on sheet pans for 22 minutes in pre-heated 204° C ovens. Baked fries were immediately transferred to the panel room. Panelists evaluated the samples after ten-minute from removal from the ovens. Separate rounds of batches were prepared and served fresh during the panel session. Each panelist was asked to use 2-3 fries per attribute per sample to allow for variation in the products. Panelists were then asked to average the fries evaluated per attribute per sample and enter the averaged score as their response.

All products were evaluated for texture by panelists trained in Sensory Spectrum methodology of foods. Products were presented to the Descriptive Panel using a randomized design. The data was collected using Compusense software. Panelists rated the intensity of these texture attributes on a 15-point intensity scale using the references provided. Products were evaluated at ten minutes for the texture attributes listed below. The results are expressed in Table 2.
Hardness - Front Teeth
Crispness - 1^{st} Bite
Toughness
Uniformity of Bite
Hardness - Molars
Crispness - 1^{st} Chew
Crispness - 4-5^{th} Chews
Duration of Sound

**Table 2.**

| Textural Attribute | 1A | 1B | 1C | 1D |
|---|---|---|---|---|
| Hardness - Front Teeth | 5.00 | 5.06 | 4.92 | 5.19 |
| Crispness - 1st Bite | 1.81 | 2.08 | 1.89 | 2.11 |
| Toughness | 3.81 | 3.58 | 3.86 | 3.97 |
| Uniformity of Bite | 8.33 | 9.08 | 9.13 | 9.08 |
| Hardness - Molars | 4.81 | 4.64 | 4.39 | 4.83 |
| Crispness - 1st Chew | 2.67 | 2.44 | 2.44 | 2.44 |
| Crispness - 4-5th Chews | 2.67 | 2.53 | 2.36 | 2.75 |
| Duration of Sound | 4.50 | 4.31 | 4.11 | 4.61 |

In terms of texture, all four products are quite similar in all textural attributes. The all natural, non-dextrin ingredients (the commercially available, heat moisture treated, rice flour, the commercially available, thermally inhibited, tapioca starch, and the commercially available, thermally inhibited, waxy rice starch) gave a more uniform bite at 10 minutes compared to tapioca dextrin control. In qualitative evaluation, sweet potato fries were similar in appearance and flavor. Textural differences revealed a large range in size and shape of the fries with thicker pieces being less crisp and thinner pieces being crisper. The results show that even in the absence of dextrin as a crisping agent that crispness was comparable between the samples. Such results are unexpected in the absence of a dextrin component to promote crispness. However, the commercially available, thermally inhibited tapioca starch was not as crisp after 4^{th}-5^{th} chews, therefore deemed not a direct replacement for dextrin. Based on experience in practice, thermally inhibited tapioca starch (considered a backbone starch) builds texture and body in coating solutions but does not individually create crispness. The commercially available, heat moisture treated, rice flour and commercially available thermally inhibited waxy rice starch were equivalent to dextrin in crispness.

**Example 2 evaluation of a commercially available, heat moisture treated, rice flour compared to other components on crispness attributes in a sweet potato product coating.** Results of the experimentation conducted in Example 1 indicated that a commercially available, heat moisture treated, rice flour showed comparable textural results as compared to tapioca dextrin. A design of experiments (DOE) was carried out to evaluate the level of each starch or flour component in the composition, which included a commercially available, thermally inhibited, tapioca starch, native rice flour, an unmodified corn starch containing about 55% amylose, and a commercially available, heat moisture treated, rice flour. The commercially available, thermally inhibited, waxy rice starch was not evaluated in the design of experiments. Sweet potatoes were peeled, pre-heated in water for 30 minutes at 71° C, cut into 3/8 inch strips, and immersed and blanched in hot water for 3 minutes at 88° C. After blanching, the potato strips were immersed for 30 seconds in an aqueous solution comprising 0.75% SAPP which was held at a temperature of 71-77° C. After removal, the strips were drained and then dried in a conventional dryer at 60° C, for a sufficient length of time to produce a 10 to 14 percent water loss.

Enrobing solutions were then prepared comprising the ingredients listed in Table 3 including water. The dry ingredients were combined, added to the water at a 1:1.4 ratio, and well mixed using a KitchenAid® mixer. The sweet potato strips were then dipped in the starch solution. The sweet potato strips were then drained to remove excess solution and to achieve a solution coating pickup about 12-18%, averaging 15%. The strips were then par fried in soybean oil for 60 seconds at 191° C. The strips were then par fried in soybean oil for 60 seconds at 191° C. The sweet potato strips were transferred into plastic trays, frozen in a blast freezer at -29° C for 1 hour minimum, and stored in a freezer for two weeks at -23° C before being evaluated by sensory descriptive profiling as in Example 1. See Table 4 for results.

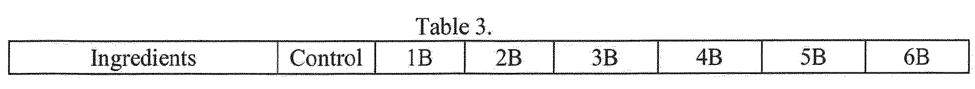

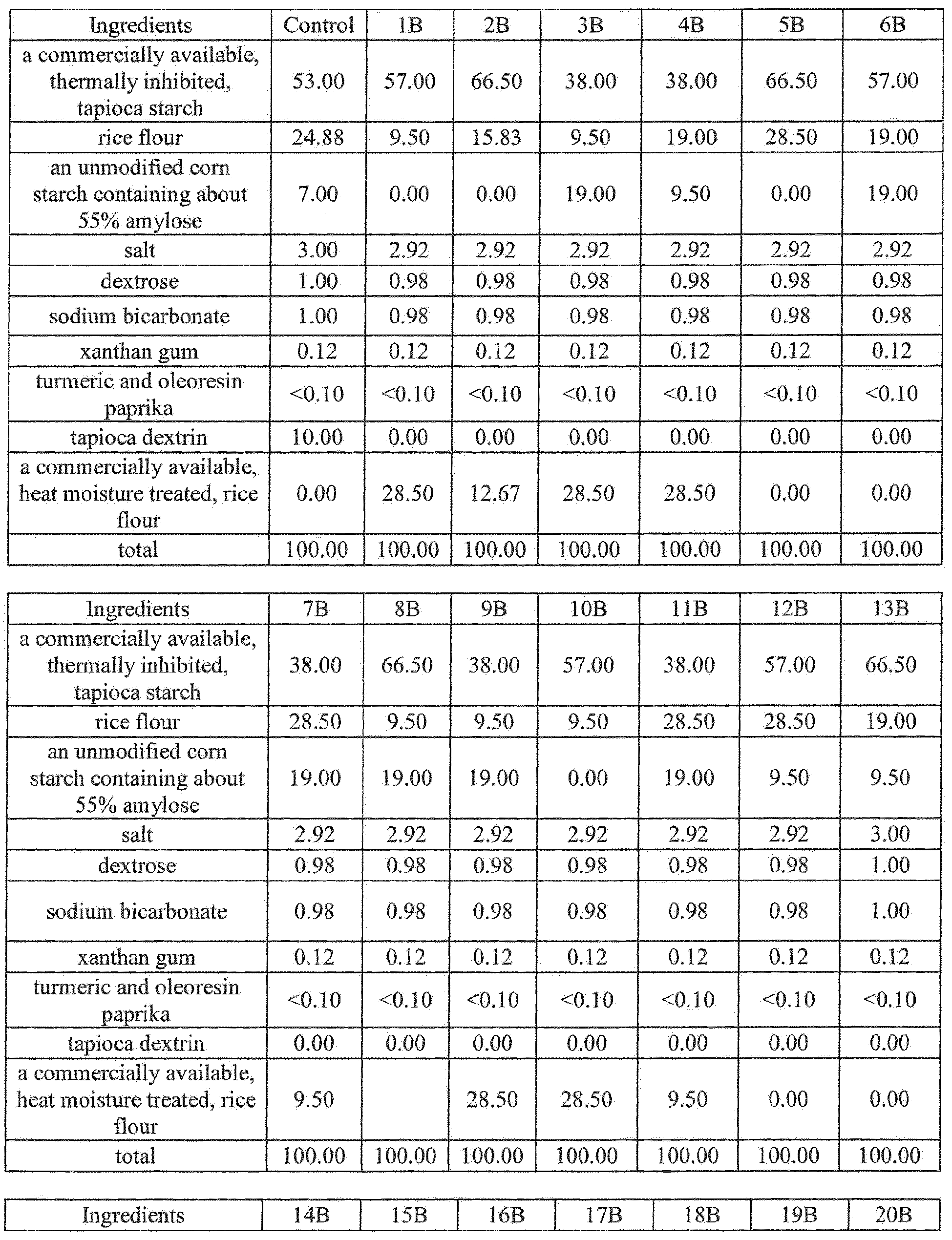

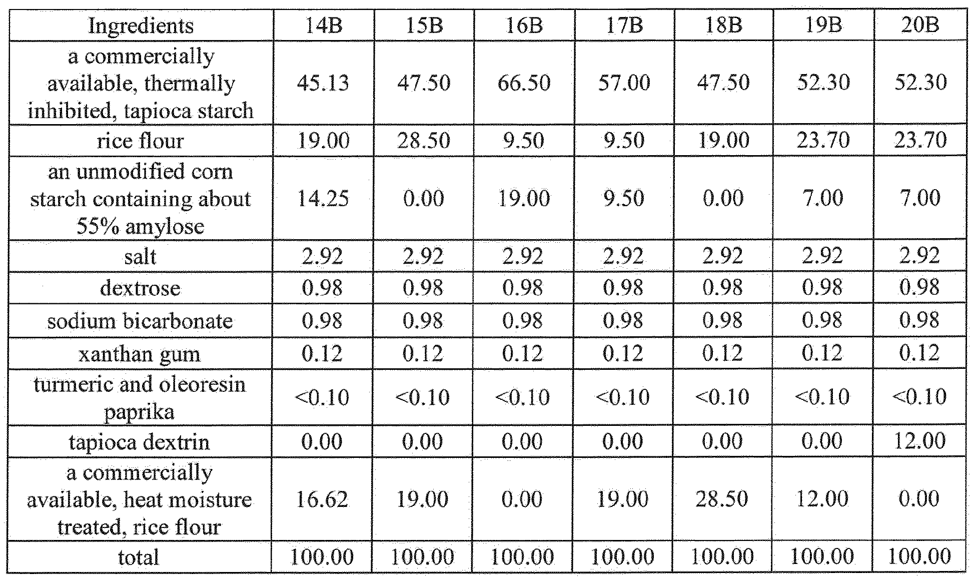

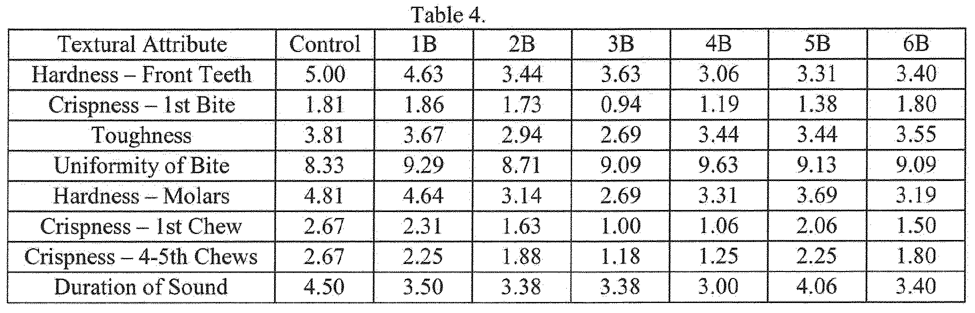

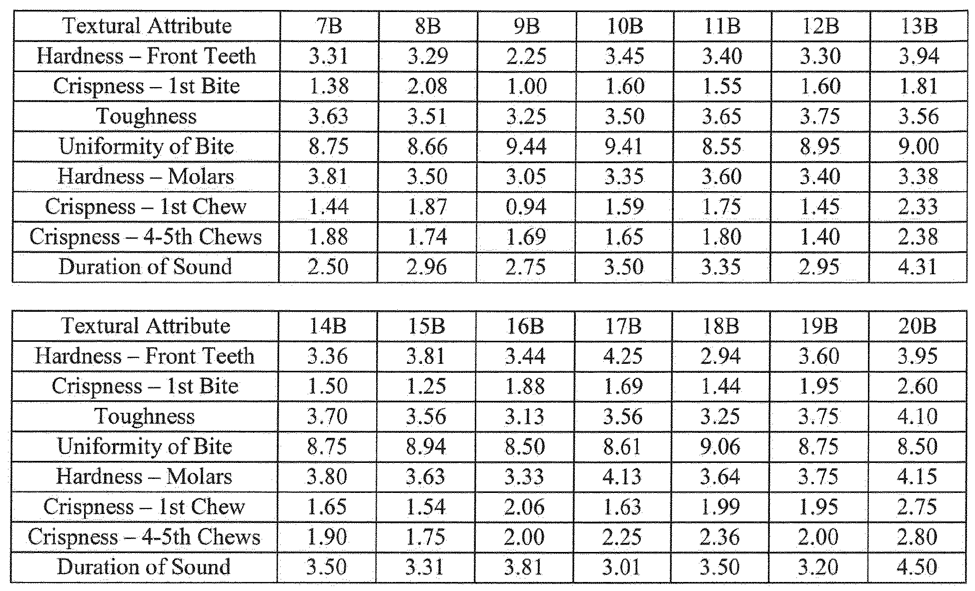

Descriptive analysis revealed significant differences among DOE samples and tapioca dextrin. Samples with higher levels of the commercially available, heat moisture treated, rice flour and the commercially available, thermally inhibited, tapioca starch have more crispness, duration of sound, and uniformity of bite. Samples with moderate levels of the commercially available, heat moisture treated, rice flour and the commercially available, thermally inhibited, tapioca starch indicate less crispness, hardness, and duration of sound.

**Example 3 comparisons of a commercially available, heat moisture treated, rice flour to native rice flour on crispness attributes in a sweet potato product coating.** Results of the experimentation conducted in Example 2 indicated that higher levels of a commercially available, heat moisture treated, rice flour in combination with higher levels of the commercially available, thermally inhibited, tapioca starch seems to have more of an impact on crispness. Further experimentation was required to conclusively determine whether the benefits could be solely attributed to the commercially available, heat moisture treated, rice flour, or whether the native rice flour provided the same benefit. Therefore, another six variables within the design of experiments were tested to determine the extent of the benefit.

Sweet potatoes were peeled, pre-heated in water for 30 minutes at 71° C, cut into 3/8 inch strips, and immersed and blanched in hot water for 3 minutes at 88° C. After blanching, the potato strips were immersed for 30 seconds in an aqueous solution comprising 0.75% SAPP which was held at a temperature of 71-77° C. After removal, the strips were drained and then dried in a conventional dryer at 60° C, for a sufficient length of time to produce a 10 to 14 percent water loss.

Enrobing solutions were then prepared comprising the ingredients listed in Table 5 including water. The dry ingredients were combined, added to the water at a 1:1.4 ratio, and well mixed using a KitchenAid® mixer. The sweet potato strips were then dipped in the starch solution. The sweet potato strips were then drained to remove excess solution and to achieve a solution coating pickup about 12-18%, averaging 15%. The strips were then par fried in soybean oil for 60 seconds at 191° C. The strips were then par fried in soybean oil for 60 seconds at 191° C. The sweet potato strips were transferred into plastic trays, frozen in a blast freezer at -29° C for 1 hour minimum, and stored in a freezer for two weeks at -23° C before being evaluated by sensory descriptive profiling as in Example 1. See Table 6 for results.

**Table 5.**

| Ingredients | 1C | 2C | 3C | 4C | 5C | 6C |
|---|---|---|---|---|---|---|
| a commercially available, thermally inhibited, tapioca starch | 57.00 | 38.00 | 57.00 | 52.25 | 38.00 | 52.25 |
| rice flour | 28.50 | 19.00 | 9.50 | 14.25 | 14.25 | 23.75 |
| an unmodified corn starch containing about 55% amylose | 9.50 | 14.25 | 4.75 | 9.50 | 14.25 | 7.12 |
| salt | 2.92 | 2.92 | 2.92 | 2.92 | 2.92 | 2.92 |
| dextrose | 0.98 | 0.98 | 0.98 | 0.98 | 0.98 | 0.98 |
| sodium bicarbonate | 0.98 | 0.98 | 0.98 | 0.98 | 0.98 | 0.98 |
| xanthan gum | 0.12 | 0.12 | 0.12 | 0.12 | 0.12 | 0.12 |
| turmeric and oleoresin paprika | <0.10 | <0.10 | <0.10 | <0.10 | <0.10 | <0.10 |
| a commercially available, heat moisture treated, rice flour | 0.00 | 23.75 | 23.75 | 19.00 | 28.50 | 11.88 |
| total | 100.00 | 100.00 | 100.00 | 100.00 | 100.00 | 100.00 |

**Table 6.**

| Textural Attribute | 1C | 2C | 3C | 4C | 5C | 6C |
|---|---|---|---|---|---|---|
| Hardness - Front Teeth | 3.39 | 3.57 | 3.94 | 4.06 | 3.72 | 4.44 |
| Crispness - 1st Bite | 1.39 | 1.50 | 2.06 | 2.17 | 3.78 | 0.93 |
| Toughness | 3.06 | 2.67 | 2.89 | 2.89 | 3.06 | 2.89 |
| Uniformity of Bite | 9.33 | 9.11 | 8.83 | 9.21 | 8.94 | 9.93 |
| Hardness - Molars | 3.72 | 3.83 | 3.78 | 3.90 | 4.00 | 3.94 |
| Crispness - 1st Chew | 1.56 | 1.28 | 2.17 | 2.50 | 1.72 | 1.16 |
| Crispness - 4-5th Chews | 1.78 | 1.33 | 2.06 | 2.06 | 1.72 | 0.94 |
| Duration of Sound | 3.11 | 2.64 | 3.72 | 3.44 | 3.00 | 1.44 |

Descriptive analysis revealed significant differences among products in crispness in the samples. Samples with high levels of a commercially available, heat moisture treated, rice flour and a commercially available, thermally inhibited, tapioca starch have more of an impact on crispness and duration of sound. Samples with high levels of native rice flour exhibited less crispness.

**Example 4 comparisons of commercially available, heat moisture treated, rice flour, and commercially available, thermally inhibited, waxy rice starch enrobing solutions at identified optimal usage levels compared to the tapioca dextrin in the sweet potato product coating.** Results of the experimentation conducted in Example 3 indicated that higher levels of a commercially available, heat moisture treated, rice flour in combination with higher levels of a commercially available, thermally inhibited, tapioca starch provided improved crispness over native rice flour. It was desired to test these six variables in combination with variables that exhibited higher levels of crispness from previous work and new compositions based on key findings from the work outlined in this application. These included compositions that utilized a commercially available thermally inhibited waxy rice starch. Also included were compositions that utilized another commercially available, thermally inhibited, tapioca starch to replace the primary ungelatinized starch component. Eighteen variables were produced and evaluated by a group of key project team members. The six best performing variables (1D, 2D, 3D, 4D, 5D, 6D), and 7D (control) with tapioca dextrin were evaluated by a trained sensory panel.

Sweet potatoes were peeled, pre-heated in water for 30 minutes at 71° C, cut into 3/8 inch strips, and immersed and blanched in hot water for 3 minutes at 88° C. After blanching, the potato strips were immersed for 30 seconds in an aqueous solution comprising 0.75% SAPP which was held at a temperature of 71-77° C. After removal, the strips were drained and then dried in a conventional dryer at 60° C, for a sufficient length of time to produce a 10 to 14 percent water loss.

Enrobing solutions were then prepared comprising the ingredients listed in Table 7 including water. The dry ingredients and then added to the water at a 1:1.4 ratio and well mixed using a KitchenAid® mixer. The sweet potato strips were then dipped in the starch solution. The sweet potato strips were then drained to remove excess solution and to achieve a solution coating pickup about 12-18%, averaging 15%. The strips were then par fried in soybean oil for 60 seconds at 191° C. The strips were then par fried in soybean oil for 60 seconds at 191° C. The sweet potato strips were transferred into plastic trays, frozen in a blast freezer at -29° C for 1 hour minimum, and stored in a freezer for two weeks at - 23° C before being evaluated by sensory descriptive profiling as in Example 1. See Table 8 for results.

**Table 7**

| Ingredients | 1D | 2D | 3D | 4D | 5D | 6D | 7D |
|---|---|---|---|---|---|---|---|
| a commercially available, thermally inhibited, tapioca starch | 38.00 | 33.25 | 0.00 | 0.00 | 52.25 | 38.00 | 53.00 |
| another thermally inhibited, tapioca starch | 0.00 | 0.00 | 28.50 | 28.50 | 0.00 | 0.00 | 0.00 |
| rice flour | 19.00 | 19.00 | 28.50 | 28.50 | 23.75 | 16.63 | 24.88 |
| an unmodified corn starch containing about 55% amylose | 14.25 | 9.50 | 14.25 | 0.00 | 7.12 | 14.25 | 7.00 |
| an unmodified corn starch containing about 70% amylose | 0.00 | 0.00 | 0.00 | 14.25 | 0.00 | 0.00 | 0.00 |
| salt | 2.92 | 2.92 | 2.92 | 2.92 | 2.92 | 2.92 | 3.00 |
| dextrose | 0.98 | 0.98 | 0.98 | 0.98 | 0.98 | 0.98 | 1.00 |
| sodium bicarbonate | 0.98 | 0.98 | 0.98 | 0.98 | 0.98 | 0.98 | 1.00 |
| xanthan gum | 0.12 | 0.12 | 0.12 | 0.12 | 0.12 | 0.12 | 0.12 |
| turmeric and oleoresin paprika | <0.10 | <0.10 | <0.10 | <0.10 | <0.10 | <0.10 | <0.10 |
| a commercially available, heat moisture treated, rice flour | 23.75 | 33.25 | 23.75 | 23.75 | 0.00 | 26.12 | 0.00 |
| a commercially available, thermally inhibited, waxy rice starch | 0.00 | 0.00 | 0.00 | 0.00 | 11.88 | 0.00 | 0.00 |
| a commercially available, tapioca dextrin | 0.00 | 0.00 | 0.00 | 0.00 | 0.00 | 0.00 | 10.00 |
| total | 100.00 | 100.00 | 100.00 | 100.00 | 100.00 | 100.00 | 100.00 |

**Table 8.**

| Textural Attribute | 1D | 2D | 3D | 4D | 5D | 6D | 7D Control |
|---|---|---|---|---|---|---|---|
| Hardness - Front Teeth | 4.33 | 4.53 | 4.63 | 4.43 | 4.77 | 4.84 | 4.87 |
| Crispness - 1st Bite | 2.96 | 2.57 | 2.90 | 2.63 | 2.97 | 2.59 | 2.85 |
| Toughness | 3.57 | 3.40 | 3.43 | 3.30 | 3.67 | 3.47 | 3.53 |
| Uniformity of Bite | 8.50 | 8.37 | 8.70 | 8.30 | 8.41 | 8.69 | 8.61 |
| Hardness - Molars | 4.57 | 4.62 | 4.50 | 4.63 | 4.56 | 4.44 | 4.67 |
| Crispness - 1st Chew | 2.83 | 2.49 | 2.85 | 2.70 | 2.93 | 2.80 | 2.87 |
| Crispness - 4-5th Chews | 2.89 | 2.80 | 2.96 | 2.77 | 3.13 | 2.86 | 3.10 |
| Duration of Sound | 4.23 | 4.00 | 4.17 | 4.06 | 4.07 | 3.79 | 4.13 |

All prototype compositions performed similarly to each other. The data suggests the following trend from most to least crisp: 5D, 7D (control), 3D, 1D, 6D, 4D, and 2D. Therefore, it can be concluded that overall 3D and 5D are the closest matches to 7D (control) with dextrin. The results show that even in the absence of dextrin as a crisping agent that crispness was comparable between the samples.

**Example 5 sensory evaluation of commercially available, heat moisture treated, rice flour, low protein, heat moisture treated, rice flour, native rice flour, commercially available, heat moisture treated, waxy wheat flour, commercially available, thermally inhibited, waxy rice starch (medium inhibition), commercially available, thermally inhibited, waxy rice starch (high inhibition), native rice starch, thermally inhibited sorghum flour (medium inhibition), thermally inhibited sorghum flour (high inhibition), and native sorghum flour - containing enrobing solutions at identified optimal usage levels compared to the tapioca dextrin in the sweet potato product coating.** Results of the experimentation conducted in Example 4 indicated that following the prescribed compositions highlighted in this application disclosure led to the development of compositions which were equivalent in crispness to an identified typical recipe with dextrin. Use of high levels of a commercially available, heat moisture treated, rice flour in combination with high levels of commercially available, thermally inhibited, tapioca starch provided comparable crispness to a control composition with tapioca dextrin. Use of a commercially available, thermally inhibited, waxy rice starch also produced similar crispness results as compared to tapioca dextrin. Previous screening work indicated thermally inhibited sorghum flour and heat moisture treated waxy wheat flour showed promise as providing a similar crispness benefit. A set of variables was identified to compare the crispness benefits of the heat moisture treated rice flour; heat moisture treated waxy wheat flour, thermally inhibited waxy rice starch, and thermally inhibited sorghum flour. In addition to baking, it was desired to evaluate the impact of rethermalizing the sweet potato fries by frying on crispness.

Sweet potatoes were peeled, pre-heated in water for 30 minutes at 71° C, cut into 3/8 inch strips, and immersed and blanched in hot water for 3 minutes at 88° C. After blanching, the potato strips were immersed for 30 seconds in an aqueous solution comprising 0.75% SAPP which was held at a temperature of 71-77° C. After removal, the strips were drained and then dried in a conventional dryer at 60° C, for a sufficient length of time to produce a 10 to 14 percent water loss.

Enrobing solutions were then prepared comprising the ingredients listed in Table 9 including water. The dry ingredients and then added to the water at a 1:1.4 ratio and well mixed using a KitchenAid® mixer. The sweet potato strips were then dipped in the starch solution. The sweet potato strips were then drained to remove excess solution and to achieve a solution coating pickup about 12-18%, averaging 15%. The strips were then par fried in soybean oil for 60 seconds at 191° C. The sweet potato strips were transferred into plastic trays, frozen in a blast freezer at -29° C for 1 hour minimum, and stored in a freezer for two weeks at -23° C before being evaluated by a team of researchers for crispness. See Table 10 for results.

**Table 9**

| ingredients | |
|---|---|
| a commercially available, thermally inhibited, tapioca starch | 38.00 |
| rice flour | 19.00 |
| an unmodified corn starch containing about 55% amylose | 14.25 |
| salt | 2.92 |
| dextrose | 0.98 |
| sodium bicarbonate | 0.98 |
| xanthan gum | 0.12 |
| turmeric and oleoresin paprika | <0.10 |
| test starch or flour | 23.75 |
| total | 100.00 |

**Table 10**

| DESCRIPTION | Variable | Crispness, Baked* | Crispness, Fried** |
|---|---|---|---|
| tapioca dextrin | 1E | 4.00 | 5.00 |
| a commercially available, heat moisture treated rice flour | 2E | 3.50 | 4.50 |
| a low protein, heat moisture treated rice flour | 3E | 4.00 | 5.00 |
| native rice flour | 4E | 2.50 | 2.50 |
| a commercially available, heat moisture treated waxy wheat flour | 5E | 4.00 | 5.00 |
| a commercially available, thermally inhibited waxy rice starch (medium inhibition) | 6E | 4.00 | 4.50 |
| a commercially available, thermally inhibited waxy rice starch (high inhibition) | 7E | 3.50 | 4.00 |
| native rice starch | 8E | 2.50 | 3.00 |
| a thermally inhibited, sorghum flour (medium inhibition) | 9E | 3.00 | 3.50 |
| a thermally inhibited, sorghum flour (high inhibition) | 10E | 3.50 | 4.50 |
| native sorghum flour | 11E | 2.50 | 2.50 |
| RATING | Scale for Attributes | 1 = Not Crisp | 1 = Not Crisp |
| | | 6= Very Crisp | 6= Very Crisp |

| | | | |
|---|---|---|---|
| *Baked - 22 minutes at 204°C. **Fried - 2.5 minutes at 182°C. | | | |

For this example, an informal evaluation was performed by an experienced group of individuals. Frozen sweet potato fry samples were portioned out in batches prior to baking or frying. Samples were baked on sheet pans for 22 minutes in pre-heated 204° C ovens or fried for 2.5 minutes at 182°C. The samples were rated on a scale of 1 to 6; 1 = not crisp to 6 = very crisp.

Informal evaluation of starches and flours used to replace tapioca dextrin in a coating composition showed that there were several that exhibited similar textural attributes in this specific recipe for sweet potato fry coating. The commercially available, heat moisture treated, rice flour and the commercially available, low protein, rice flour were similar in crispness to tapioca dextrin after baking or frying. Native rice flour was not as crisp as the commercially available, heat moisture treated, rice flour, or the low protein, rice flour after baking or frying. Heat moisture treated waxy wheat flour was similar in crispness as compared to tapioca dextrin after baking or frying. It should be noted that pickup was higher due to higher viscosity of the enrobing solution with heat moisture treated wheat flour. The commercially available, thermally inhibited, waxy rice starch (medium inhibition) was similar in crispness to tapioca dextrin after baking and frying. The other commercially available, thermally inhibited, waxy rice starch (high inhibition) was tougher and therefore not as crisp after baking and frying. Native rice flour was not as crisp thermally inhibited waxy rice starch with a medium or high inhibition level after baking or frying. Thermally inhibited sorghum flour with a high inhibition level was similar in crispness to tapioca dextrin after baking or frying. Thermally inhibited sorghum flour with a medium inhibition level was not as crisp. Native sorghum flour was not as crisp as thermally inhibited sorghum flour with a medium or high inhibition level after baking or frying. Overall, it was discovered that several heat moisture treated or thermally inhibited starches and flours exhibited similar crispness properties to tapioca dextrin in a sweet potato fry coating.

After receiving the results of the experimentation in Example 5, it was desired to expand the use of the coating containing heat moisture treated and thermally inhibited starches and flours to a potato fry product where commercial opportunities for application would be greater.

**Example 6 sensory evaluation of a commercially available, heat moisture treated rice flour, a commercially available thermally inhibited waxy rice starch (medium inhibition), and a commercially available thermally inhibited tapioca starch (high inhibition level) and their chemically modified and native counterparts compared to the tapioca dextrin in a potato product coating**. Results of the experimentation conducted in Examples 1-5 indicated that following the prescribed compositions highlighted in this application disclosure led to the development of compositions which were equivalent in crispness to an identified typical recipe with dextrin. Use of high levels of a commercially available, heat moisture treated, rice flour in combination with high levels of a commercially available, thermally inhibited, tapioca starch provided comparable crispness to a control composition with tapioca dextrin. Use of a commercially available, thermally inhibited, waxy rice starch also produced similar crispness results as compared to tapioca dextrin. Thermally inhibited tapioca starch did not exhibit the same benefit in promoting crispness as compared to tapioca dextrin on sweet potato fries. It was desired to expand the usage of the coating to potato fries which is a much higher volume opportunity for this coating. A set of variables was identified to compare the crispness benefits of the heat moisture treated rice flour and thermally inhibited waxy rice starch to thermally inhibited tapioca starch in a potato product coating, in order to validate earlier findings. In addition, it was determined that the crispness attributes of these products should be compared to their chemically modified and native starch counterparts to determine their effectiveness in optimizing crispness. In addition to baking, it was desired to evaluate the impact of rethermalizing the potato fries by frying on crispness.

Potatoes were cut into 3/8 inch strips, and immersed and blanched in hot water for 11 minutes at 71° C. After removal, the strips were drained and then dried in a conventional dryer at 60° C, for a sufficient length of time to produce a 13 to 16 percent water loss.

Enrobing solutions were then prepared comprising the ingredients listed in Table 11 including water. The dry ingredients and then added to the water at a 1:1.4 ratio and well mixed using a KitchenAid® mixer. The potato strips were then dipped in the starch solution. The potato strips were then drained to remove excess solution and to achieve a solution coating pickup about 12-18%, averaging 15%. The strips were then par fried in soybean oil for 60 seconds at 191° C. The potato strips were transferred into plastic trays, frozen in a blast freezer at -29° C for 1 hour minimum, and stored in a freezer for two weeks at -23° C before being evaluated by a team of researchers for crispness. See Table 12 for results.

**Table 11**

| ingredients | |
|---|---|
| a commercially available, thermally inhibited, tapioca starch | 38.00 |
| rice flour | 19.00 |
| an unmodified corn starch containing about 55% amylose | 14.25 |
| salt | 2.92 |
| dextrose | 0.98 |
| sodium bicarbonate | 0.98 |
| xanthan gum | 0.12 |
| turmeric and oleoresin paprika | <0.10 |
| test starch or flour | 23.75 |
| total | 100.00 |

**Table 12**

| DESCRIPTION | Variable # | Crispness, Baked* | Crispness, Fried** |
|---|---|---|---|
| a commercially available tapioca dextrin | 1F | 4.00 | 4.50 |
| commercially available, heat moisture treated rice flour | 2F | 4.00 | 5.00 |
| native rice flour | 3F | 2.50 | 2.00 |
| commercially available, thermally inhibited waxy rice starch (medium inhibition) | 4F | 4.50 | 5.00 |
| chemically modified waxy rice starch | 5F | 3.00 | 3.50 |
| native waxy rice starch | 6F | 3.00 | 3.00 |
| commercially available, thermally inhibited tapioca starch (high inhibition level) | 7F | 3.50 | 3.50 |
| chemically modified tapioca starch | 8F | 4.00 | 3.00 |
| native tapioca starch | 9F | 4.00 | 2.50 |
| RATING | Scale for Attributes | 1 = Not Crisp | 1 = Not Crisp |
| | | 6= Very Crisp | 6= Very Crisp |

| | | | |
|---|---|---|---|
| *Baked - 22 minutes at 204°C. **Fried - 2.5 minutes at 182°C. | | | |

For this example, an informal evaluation was performed by an experienced group of individuals. Frozen potato fry samples were portioned out in batches prior to baking or frying. Samples were baked on sheet pans for 22 minutes in pre-heated 204° C ovens or fried for 2.5 minutes at 182°C. The samples were rated on a scale of 1 to 6, 1 = not crisp to 6 = very crisp.

Informal evaluation of starches and flours used to replace tapioca dextrin in a coating composition showed that there were several that exhibited similar textural attributes in this specific recipe for potato fry coating. The commercially available, heat moisture treated, rice flour was similar in crispness to tapioca dextrin after baking or frying. Native rice flour was not as crisp as the commercially available, heat moisture treated, rice flour after baking or frying. The commercially available, thermally inhibited, waxy rice starch (medium inhibition level) was similar in crispness to tapioca dextrin after baking or frying. The thermally inhibited, waxy rice starch (medium inhibition level) was better than both the chemically modified equivalent and the native waxy rice starch. Thermally inhibited tapioca starch with a high inhibition level was similar in crispness to tapioca dextrin after baking but not frying. Chemically modified tapioca starch and native tapioca starch were equivalent in crispness as compared to thermally inhibited tapioca starch with a high inhibition level after baking but slightly lower after frying. It was concluded that the thermal inhibition of tapioca starch did not result in an unexpected benefit as compared to chemically modified or native tapioca starch. In addition, it did not provide the same crispness benefit as compared to heat moisture treated rice flour or thermally inhibited waxy rice starch, especially after being reconstituted by frying. Therefore, thermally inhibited tapioca starch is not recommended as a replacement for dextrin in this patent application. In conclusion, it was discovered that heat moisture treated rice flour and thermally inhibited waxy rice starch exhibited similar crispness properties to tapioca dextrin in a potato fry coating.

**Example 7 sensory evaluation of a commercially available, heat moisture treated rice flour, heat moisture treated, low protein, rice flour, commercially available, thermally inhibited waxy rice starch (medium inhibition), commercially available, thermally inhibited waxy rice starch (high inhibition), thermally-inhibited sorghum flour (medium inhibition), thermally inhibited sorghum flour (high inhibition), commercially available, heat moisture treated, waxy wheat flour, thermally inhibited waxy wheat flour (medium inhibition), and thermally inhibited waxy wheat flour (high inhibition) - containing enrobing solutions at identified optimal usage levels compared to the tapioca dextrin in a potato product coating**. Results of the experimentation conducted in Example 5 indicated that following the prescribed compositions highlighted in this application disclosure led to the development of compositions which were equivalent in crispness to an identified typical recipe with dextrin in a potato product coating. Previous screening work indicated thermally inhibited sorghum flour, a heat moisture treated waxy wheat flour and a thermally inhibited waxy wheat flour showed promise as providing a similar crispness benefit. A set of variables was identified to compare the crispness benefits of the heat moisture treated rice flour, waxy rice starch, sorghum flour, and waxy wheat flour in a potato product coating.

Potatoes were cut into 3/8 inch strips, and immersed and blanched in hot water for 11 minutes at 71° C. After removal, the strips were drained and then dried in a conventional dryer at 60° C, for a sufficient length of time to produce a 13 to 16 percent water loss.

Enrobing solutions were then prepared comprising the ingredients listed in Table 13 including water. The dry ingredients and then added to the water at a 1:1.4 ratio and well mixed using a KitchenAid® mixer. The potato strips were then dipped in the starch solution. The potato strips were then drained to remove excess solution and to achieve a solution coating pickup about 12-18%, averaging 15%. The strips were then par fried in soybean oil for 60 seconds at 191° C. The potato strips were transferred into plastic trays, frozen in a blast freezer at -29° C for 1 hour minimum, and stored in a freezer for two weeks at -23° C before being evaluated by a team of researchers for crispness. See Table 14 for results.

**Table 13**

| ingredients | |
|---|---|
| a commercially available, thermally inhibited, tapioca starch | 38.00 |
| rice flour | 19.00 |
| an unmodified corn starch containing about 55% amylose | 14.25 |
| salt | 2.92 |
| dextrose | 0.98 |
| sodium bicarbonate | 0.98 |
| xanthan gum | 0.12 |
| turmeric and oleoresin paprika | <0.10 |
| test starch or flour | 23.75 |
| total | 100.00 |

**Table 14**

| DESCRIPTION | Variable | Crispness Baked* | Crispness, Fried** |
|---|---|---|---|
| a commercially available, thermally inhibited waxy rice starch (medium inhibition) | 1G | 4.50 | 5.00 |
| a commercially available, thermally inhibited waxy rice starch (high inhibition) | 2G | 3.50 | 4.50 |
| native waxy rice starch | 3G | 2.50 | 3.00 |
| a commercially available, heat moisture treated rice flour | 4G | 4.00 | 4.50 |
| a low protein, heat moisture treated rice flour | 5G | 3.50 | 4.00 |
| native rice flour | 6G | 2.25 | 2.75 |
| a commercially available, heat moisture treated waxy wheat flour | 7G | 4.50 | 5.50 |
| a thermally inhibited, waxy wheat flour (medium inhibition) | 8G | 3.50 | 4.50 |
| a thermally inhibited, waxy wheat flour (high inhibition) | 9G | 4.25 | 5.50 |
| native waxy wheat flour | 10G | 2.50 | 3.75 |
| a thermally inhibited, sorghum flour (medium inhibition) | 11G | 3.00 | 3.50 |
| a thermally inhibited, sorghum flour (high inhibition) | 12G | 3.50 | 4.50 |
| native sorghum flour | 13G | 2.50 | 2.50 |
| a commercially available tapioca dextrin | 14G | 4.50 | 5.00 |
| RATING | Scale for Attributes | 1 = Not Crisp 6= Very Crisp | 1 = Not Crisp 6= Very Crisp |

| | | | |
|---|---|---|---|
| *Baked - 22 minutes at 204°C. **Fried - 2.5 minutes at 182°C. | | | |

For this example, an informal evaluation was performed by an experienced group of individuals. Frozen potato fry samples were portioned out in batches prior to baking or frying. Samples were baked on sheet pans for 22 minutes in pre-heated 204° C ovens or fried for 2.5 minutes at 182°C. The samples were rated on a scale of 1 to 6; 1 = not crisp to 6 = very crisp.

Informal evaluation of starches and flours used to replace tapioca dextrin in a coating composition showed that there were several that exhibited similar textural attributes in this specific recipe for potato fry coating. The commercially available, heat moisture treated, rice flour and a low protein, heat moisture treated, rice flour were similar in crispness to tapioca dextrin after baking or frying. Native rice flour was not as crisp as the commercially available, heat moisture treated, rice flour, or the low protein, heat moisture treated, rice flour after baking or frying. The commercially available, thermally inhibited, waxy rice starch (medium inhibition level) was similar in crispness to tapioca dextrin after frying. The other commercially available, thermally inhibited, waxy rice starch (high inhibition level) was similar in crispness after frying but was tougher and therefore not as crisp after baking. Thermally inhibited sorghum flour with a high inhibition level was similar in crispness to tapioca dextrin after baking or frying. Thermally inhibited sorghum flour with a medium inhibition level was not as crisp. Native sorghum flour was not as crisp as thermally inhibited sorghum flour with a medium or high inhibition level after baking or frying. Heat moisture treated waxy wheat flour and thermally inhibited waxy wheat flour with a high inhibition level were similar in crispness as compared to tapioca dextrin after baking or frying. Thermally inhibited waxy wheat flour with a medium inhibition level was not as crisp. Native waxy wheat flour was not as crisp as the heated moisture treated or thermally inhibited wheat flour samples. It should be noted that pickup was higher due to higher viscosity of the enrobing solution on all the wheat flour samples. Overall, it was discovered that several heat moisture treated or thermally inhibited starches and flours exhibited similar crispness properties to tapioca dextrin in a potato fry coating.

## Claims

1. A composition comprising separately by weight:
a) from 20% to 70% of non-gelatinized starch,
b) from 5% to 40% of native rice flour,
c) from 5% to 30% of high amylose corn starch, and
d) from 10% to 40% of flour or starch, which has been heat moisture treated or thermally inhibited, wherein the non-gelatinized starch is potato starch, corn starch, tapioca starch, or any mixtures thereof, wherein the flour or starch, which has been heat moisture treated or thermally inhibited is heat moisture treated rice flour, thermally inhibited waxy rice starch, thermally inhibited sorghum flour, heat moisture treated or thermally inhibited waxy wheat flour, or any mixtures thereof and wherein the composition is dextrin free.

2. The composition of claim 1, wherein the amount by weight of non-gelatinized starch is from 30% to 50%.

3. The composition of claim 1 or of claim 2, wherein the amount by weight of native rice flour is from 15% to 30%.

4. The composition of any one of claims 1-3, wherein the amount by weight of high amylose corn starch is from 9% to 24%.

5. The composition of any one of claims 1-4, wherein the amount by weight of flour or starch, which has been heat moisture treated or thermally inhibited is from 10% to 35%.

6. The composition of claim 1, wherein the amount by weight of non-gelatinized starch is from 35% to 40%, the amount by weight of native rice flour is from 18% to 24%, the amount by weight of high amylose corn starch is from 12% to 17%, and the amount by weight of flour or starch, which has been heat moisture treated or thermally inhibited is from 20% to 25%.

7. An enrobing solution comprising one part by weight of a composition of any one of claims 1-6 and from one part to two parts by weight of water.

8. The enrobing solution of claim 7 comprising from 1.2 parts to 1.6 parts by weight of water.

9. An enrobed food prepared with the enrobing solution of claim 7 or of claim 8 and a food.

10. The enrobed food of claim 9, wherein the food comprises potato.

11. The enrobed food of claim 9, wherein the enrobed food comprises sweet potato.

12. The enrobed food of any one of claims 9-11, wherein the enrobed food is then, in any sequence, par fried, frozen, and baked.

## Patentansprüche

1. Zusammensetzung, umfassend einzeln nach Gewicht:
a) von 20% bis 70% nichtverkleisterter Stärke,
b) von 5% bis 40% natives Reismehl,
c) von 5% bis 30% Maisstärke mit hohem Amylosegehalt, und
d) von 10% bis 40% Mehl oder Stärke, die oder das mit Hitze und Feuchtigkeit behandelt oder thermisch inhibiert wurde, wobei die nichtverkleisterte Stärke Kartoffelstärke, Maisstärke, Tapiokastärke oder irgendeine Mischung davon ist, wobei das Mehl oder die Stärke, die oder das mit Hitze und Feuchtigkeit behandelt oder thermisch inhibiert wurde, mit Hitze und Feuchtigkeit behandeltes Reismehl, thermisch inhibierte, wachshaltige Reisstärke, thermisch inhibiertes Hirsemehl, mit Hitze und Feuchtigkeit behandeltes oder thermisch inhibiertes, wachshaltiges Weizenmehl oder jegliche Mischungen davon ist und wobei die Zusammensetzung frei von Dextrin ist.

2. Zusammensetzung nach Anspruch 1, wobei die Gewichtsmenge nichtverkleisterter Stärke von 30% bis 50% beträgt.

3. Zusammensetzung nach Anspruch 1 oder 2, wobei die Gewichtsmenge an nativem Reismehl von 15% bis 30% beträgt.

4. Zusammensetzung nach irgendeinem der Ansprüche 1-3, wobei die Gewichtsmenge der Maisstärke mit hohem Amylosegehalt von 9% bis 24% beträgt.

5. Zusammensetzung nach irgendeinem der Ansprüche 1-4, wobei die Gewichtsmenge an Mehl oder Stärke, die oder das mit Hitze und Feuchtigkeit behandelt oder thermisch inhibiert wurde, von 10% bis 35% beträgt.

6. Zusammensetzung nach Anspruch 1, wobei die Gewichtsmenge nichtverkleisterter Stärke von 35% bis 40% beträgt, die Gewichtsmenge an nativem Reismehl von 18% bis 24% beträgt, die Gewichtsmenge der Maisstärke mit hohem Amylosegehalt von 12% bis 17% beträgt, und die Gewichtsmenge an Mehl oder Stärke, die oder das mit Hitze und Feuchtigkeit behandelt oder thermisch inhibiert wurde, von 20% bis 25% beträgt.

7. Eine Überzugslösung, umfassend einen Gewichtsteil einer Zusammensetzung nach irgendeinem der Ansprüche 1-6 und von einem bis zwei Gewichtsteile an Wasser.

8. Überzugslösung nach Anspruch 7, umfassend von 1,2 Gewichtsteile bis 1,6 Gewichtsteile an Wasser.

9. Überzogenes Nahrungsmittel, hergestellt mit der Überzugslösung nach Anspruch 7 oder nach Anspruch 8 und einem Nahrungsmittel.

10. Überzogenes Nahrungsmittel nach Anspruch 9, wobei das Nahrungsmittel Kartoffel umfasst.

11. Überzogenes Nahrungsmittel nach Anspruch 9, wobei das überzogene Nahrungsmittel Süßkartoffel umfasst.

12. Überzogenes Nahrungsmittel nach irgendeinem der Ansprüche 9-11, wobei das überzogene Nahrungsmittel dann, in irgendeiner Reihenfolge, frittiert (par fried), gefroren und gebacken ist.

## Revendications

1. Composition comprenant séparément en poids :
a) de 20 à 70 % d'amidon non gélatinisé,
b) de 5 à 40 % de farine de riz indigène,
c) de 5 à 30 % d'amidon de maïs riche en amylose, et
d) de 10 à 40 % de farine ou d'amidon, qui a été traité par humidité à la chaleur ou inhibé thermiquement, où l'amidon non gélatinisé est un amidon de pomme de terre, un amidon de maïs, un amidon de tapioca ou l'un quelconque de leurs mélanges, où la farine ou l'amidon, qui a été traité par humidité à la chaleur ou inhibé thermiquement est de la farine de riz traitée par humidité à la chaleur, de la farine de riz cireuse inhibée thermiquement, de la farine de sorgho inhibée thermiquement, de la farine de blé cireuse traitée par humidité à la chaleur ou inhibée thermiquement ou l'un quelconque de leurs mélanges, et où la composition est exempte de dextrine.

2. Composition selon la revendication 1, dans laquelle la quantité en poids de l'amidon non gélatinisé est de 30 % à 50 %.

3. Composition selon la revendication 1 ou la revendication 2, dans laquelle la quantité en poids de farine de riz indigène est de 15 % à 30 %.

4. Composition selon l'une quelconque des revendications 1 à 3, dans laquelle la quantité en poids de l'amidon de maïs riche en amylose est de 9 % à 24 %.

5. Composition selon l'une quelconque des revendications 1 à 4, dans laquelle la quantité en poids de farine ou d'amidon, qui a été traité par humidité à la chaleur ou inhibé thermiquement, est de 10 % à 35 %.

6. Composition selon la revendication 1, dans laquelle la quantité en poids d'amidon non gélatinisé est de 35 % à 40 %, la quantité en poids de farine de riz indigène est de 18 % à 24 %, la quantité en poids d'amidon de maïs riche en amylose est de 12 % à 17 %, et la quantité en poids de farine ou d'amidon, qui a été traité par humidité à la chaleur ou inhibé thermiquement, est de 20 % à 25 %.

7. Solution d'enrobage comprenant une partie en poids d'une composition selon l'une quelconque des revendications 1 à 6 et de une partie à deux parties en poids d'eau.

8. Solution d'enrobage selon la revendication 7, comprenant de 1,2 partie à 1,6 partie en poids d'eau.

9. Aliment enrobé préparé avec la solution d'enrobage selon la revendication 7 ou la revendication 8 et un aliment.

10. Aliment enrobé selon la revendication 9, l'aliment consistant en de la pomme de terre.

11. Aliment enrobé selon la revendication 9, l'aliment enrobé consistant en de la patate douce.

12. Aliment enrobé selon l'une quelconque des revendications 9 à 11, l'aliment enrobé étant ensuite, dans une quelconque séquence, frit, congelé et cuit.
